# EUROPÄISCHE PATENTANMELDUNG

(11) **EP 1 300 277 A2**
(43) Veröffentlichungstag der Anmeldung: **09.04.2003**
(21) Anmeldenummer: 03090005.4
(22) Anmeldetag: 16.08.2000
(51) Int. Cl.: B60K 35/00, B60R 16/02

(54) **Verfahren und Vorrichtung zur Darstellung der Funktionsbereitschaft von Beleuchtungseinrichtungen eines Kraftfahrzeuges**

(30) Priorität: 03.09.1999 DE 19941953
(62) Teilanmeldung aus: 00960469.5
(71) Anmelder: Volkswagen AG, 38436 Wolfsburg (DE)
(72) Erfinder: Heimermann, Matthias, 38302 Wolfenbüttel (DE); Lilienthal, Jörg, 38518 Gifhorn (DE)
(74) Vertreter: Effert, Bressel und Kollegen

(57) **Zusammenfassung**

Die Erfindung betrifft ein Verfahren und eine Vorrichtung zur Durchführung des Verfahrens zur Darstellung von Fahrzeugzuständen eines Kraftfahrzeuges, wobei die Vorrichtung ein Steuergerät, mindestens eine Eingabeeinheit und eine Anzeigeeinheit umfaßt, wobei das Steuergerät mit Fahrzeugzustandssensoren und / oder Fahrzeugzustandsdaten beinhaltenden Steuergeräten verbunden ist, im Steuergerät Sollwerte und Prüfprozeduren abgelegt sind, die Fahrzeugzustandsdaten mit den Sollwerten vergleichbar und funktional untergliederbar sind, die auf der Anzeigeeinheit in verschiedenen Funktionsebenen darstellbar sind, wobei über die Eingabeeinheit die dargestellte Funktionsebene veränderbar ist.

## Beschreibung

Die Erfindung betrifft ein Verfahren und eine Vorrichtung zur Darstellung der Funktionsbereitschaft von Beleuchtungseinrichtungen eines Kraftfahrzeuges.

Moderne Kraftfahrzeuge stellen ein äußerst komplexes Gesamtsystem dar, bei dem eine Vielzahl von Fahrzeugzuständen vom Kraftfahrzeugführer überwacht werden müssen. So muß beispielsweise der Kraftfahrzeugführer den Motorölstand, den Kraftstoffvorrat, den Reifendruck und die ordnungsgemäße Funktionalität der Fahrzeugleuchten überwachen und gegebenenfalls Gegenmaßnahmen vornehmen. Hierzu muß der Kraftfahrzeugführer teilweise visuelle Kontrollen mittels Ölmeßstab vornehmen oder aber Kontrolleuchten bzw. Anzeigen beobachten. Dabei sind zum einen die Kontrolleuchten, die beispielsweise als LEDs ausgebildet sind, teilweise bei bestimmten Beleuchtungsverhältnissen schwer abzulesen, und zum anderen sind die visuellen Kontrollen recht aufwendig. Ein weiterer Nachteil ist, daß aufgrund des geringen Platzes in der Konsole die verschiedenen Kontrolleuchten und Anzeigen ziemlich ungeordnet angeordnet sind, so daß eine umfassende Kontrolle durch den Kraftfahrzeugführer erschwert ist.

Der Erfindung liegt daher das technische Problem zugrunde, ein Verfahren und eine Vorrichtung zur Darstellung von Fahrzeugzuständen zu schaffen, mittels derer der Kraftfahrzeugführer umfassend und übersichtlich informiert wird.

Die Lösung des technischen Problems ergibt sich durch die Gegenstände mit den Merkmalen der Patentansprüche 1 und 3. Weitere vorteilhafte Ausgestaltungen der Erfindung ergeben sich aus den Unteransprüchen.

Hierzu umfaßt die Vorrichtung ein Steuergerät und eine Anzeigeeinheit, wobei das Steuergerät mit Fahrzeugzustandssensoren und/oder Fahrzeugzustandsdaten beinhaltende Steuergeräten verbunden ist und somit auf alle relevanten Daten zugreifen kann. Im Steuergerät sind Prüfprozeduren abgelegt, so daß die Beleuchtungseinrichtungen mittels der Prüfprozeduren in ihrer Funktionalität getestet werden können. Die erfaßten Fahrzeugzustandsdaten sind auf der Anzeigeeinheit darstellbar. Die Darstellung umfaßt ein piktogrammförmiges Kraftfahrzeug, wobei die jeweiligen Fahrzeugzustandsdaten lokal am piktogrammförmigen Kraftfahrzeug an den Stellen angeordnet werden, der ihrem realen lokalen Auftreten im Kraftfahrzeug entspricht, was eine schnelle Erfaßbarkeit durch den Kraftfahrzeugführer ermöglicht. Die Funktionsbereitschaft von Beleuchtungseinrichtungen hat einen binären Zustandswert. Beispielsweise ist eine Leselampe entweder betriebsbereit oder kaputt. Die Beleuchtungseinrichtungen werden mittels Piktogrammen dargestellt, wobei die Piktogramme bei defekten Zuständen optisch hervorgehoben dargestellt werden. Die optische Hervorhebung kann dabei durch eine unterschiedliche farbliche und / oder größenmäßige Darstellung erfolgen.

Die Erfindung wird nachfolgend anhand eines bevorzugten Ausführungsbeispieles näher erläutert. Die Fig. zeigen:
Fig. 1 eine Darstellung der obersten Funktionsebenen,
Fig. 2 eine Menüdarstellung der Füllstände von Betriebsflüssigkeiten,
Fig. 3 eine Menüdarstellung der Reifendrücke und
Fig. 4 eine Menüdarstellung der Fahrzeugbeleuchtungen.

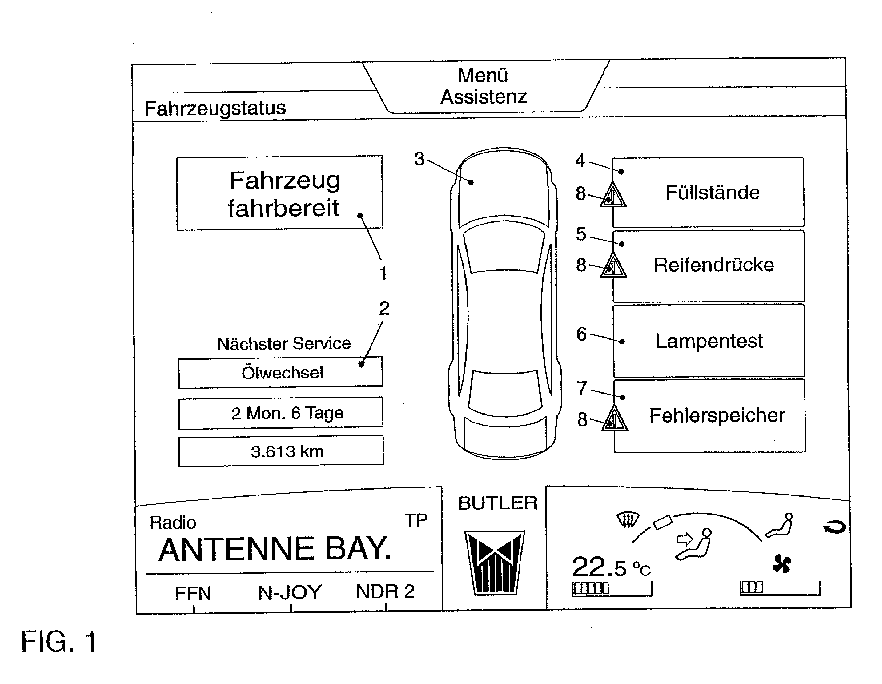

In der Fig. 1 ist ein Grundmenü für die Fahrzeugzustände dargestellt. Die Vorrichtung zur Darstellung von Fahrzeugzuständen umfaßt ein Steuergerät, mindestens eine Eingabeeinheit und eine Anzeigeeinheit, wobei das Steuergerät mit Fahrzeugzustandssensoren und / oder Fahrzeugzustandsdaten beinhaltenden Steuergeräten verbunden ist und somit auf alle relevanten Daten zugreifen kann. Erfaßte Fahrzeugzustandsdaten werden funktional untergliedert und sind auf der Anzeigeeinheit in unterschiedlichen Funktionsebenen darstellbar, wobei über die Eingabeeinheit die Funktionsebenen veränderbar sind.

Das Grundmenü umfaßt ein Fahrzeugzustandsfeld 1, eine Serviceanzeige 2, eine Draufsicht auf ein stilisiertes Kraftfahrzeug 3, ein Feld 4 "Füllstand", ein Feld 5 "Reifendruck", ein Feld 6 "Lampentest" und ein Feld 7 "Fehlerspeicher". In dem Fahrzeugzustandsfeld 1 wird alphanumerisch der Gesamtfahrzeugszustand durch ein nicht dargestelltes Steuergerät dem Kraftfahrzeugführer mitgeteilt. Dabei sind prinzipiell zwei verschiedene Ansätze möglich. Entweder zeigt das Steuergerät solange "Fahrzeug fahrbereit" an, wie das Kraftfahrzeug überhaupt technisch in Betrieb genommen werden kann, oder es wird angezeigt, ob das Kraftfahrzeug ohne schädliche Auswirkungen in Betrieb nehmbar ist. Ist beispielsweise der Motorölstand unter einem kritischen Wert, so kann für eine bestimmte Zeit das Kraftfahrzeug dennoch fahren, was jedoch zu entsprechenden Kolbenschäden führt, so daß vorzugsweise die zweite Alternative zur Anwendung kommt. In der Serviceanzeige 2 wird dem Kraftfahrzeugführer mitgeteilt, welcher Service als nächstes fällig ist und wann dieser Service vorzunehmen ist. Im dargestellten Beispiel ist als nächster Service ein Ölwechsel fällig, der entweder in zwei Monaten und sechs Tagen oder nach einer weiteren Fahrleistung von 3613 km zu erfolgen hat, je nach dem, welche Bedingung zuerst eintritt. Das stilisierte Kraftfahrzeug 3 dient zum einen zur Orientierung für die später noch zu erläuternden Menüs. Es ist jedoch auch möglich, das stilisierte Kraftfahrzeug 3 berührungssensitiv auf der Anzeigeeinheit auszubilden, so daß bei Berührung eines bestimmten Teils des Kraftfahrzeuges 3 die dort vorhandenen Fahrzeugzustandsdaten angezeigt werden. Ebenso sind die Felder 4 bis 7 berührungssensitiv ausgebildet, so daß die Berührung eines Feldes 4 bis 7 zu einem Wechsel zu dem zugehörigen Menü ermöglicht, was nachfolgend noch näher erläutert wird. Hat das Steuergerät irgendwelche kritischen Fahrzeugzustände erfaßt, so wird ein piktogrammförmiges Achtung - Zeichen 8 an das zugehörige Feld 4 bis 7 eingeblendet. Im dargestellten Beispiel ist also ein kritischer Füllstand und ein kritischer Reifendruck erfaßt worden, die auch abgespeichert werden sollten. Möchte nun der Kraftfahrzeugführer nähere Informationen zu den Füllständen der Betriebsflüssigkeiten erhalten, so muß dieser nur das entsprechende Feld 4 berühren.

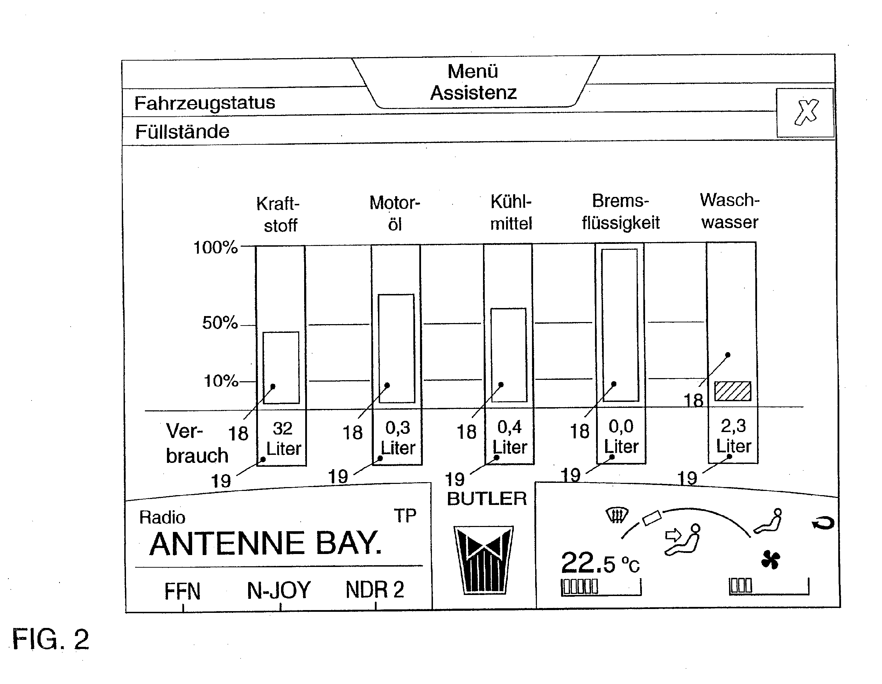

In der Fig. 2 sind die Füllstände für die Betriebsflüssigkeiten Kraftstoff, Motoröl, Kühlmittel, Bremsflüssigkeit und Wischwasser in Form von Balkendiagrammen dargestellt, wobei der jeweilige Balken 18 den aktuellen Füllstand in % zum maximal möglichen Füllstand angibt. Unterhalb der Balkendiagramme ist der jeweilige absolute Verbrauch 19 der Betriebsflüssigkeit alphanumerisch angegeben. Alternativ kann anstelle des Verbrauchs auch die absolute Füllmenge dargestellt werden. Fällt eine Verbrauchsflüssigkeit unter einen kritischen Wert, so wird der entsprechende Balken optisch hervorgehoben, indem dieser Balken beispielsweise in einer anderen Farbe dargestellt wird. Im dargestellten Beispiel ist die Waschwassermenge unter 10 % gefallen, so daß diese optisch hervorgehoben wird. Die kritische Grenze kann dabei für jede Betriebsflüssigkeit verschieden sein.

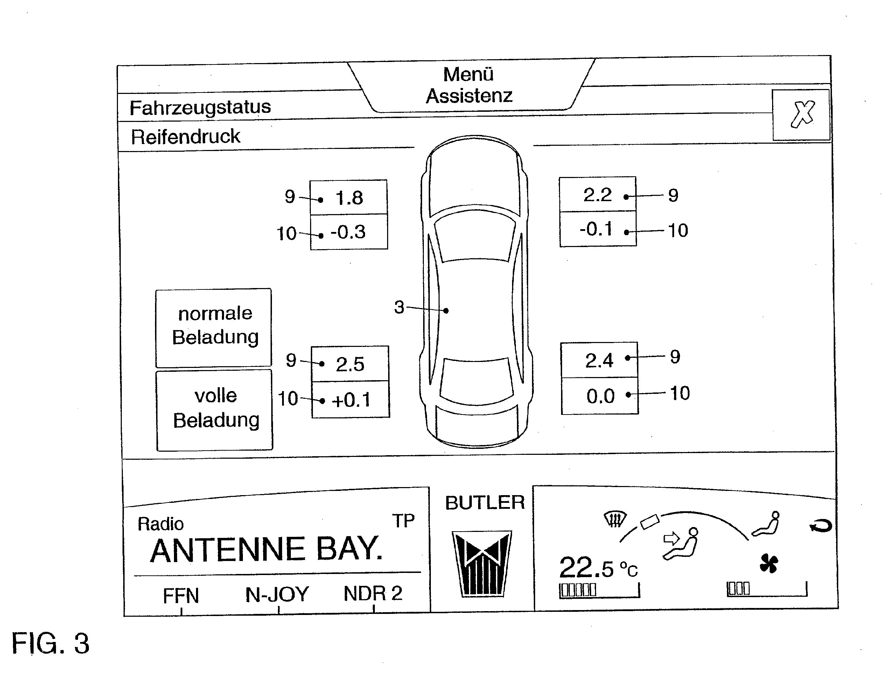

In der Fig. 3 ist nun das zugehörige Menü für die Reifendrücke bei normaler Beladung dargestellt. Hierzu wird jedem Reifen des stilisierten Kraftfahrzeuges 3 ein Istfeld 9 zugeordnet, in dem der aktuelle Reifendruck alphanumerisch dargestellt ist. Unter jedem Istfeld 9 ist ein Feld 10 angeordnet, in dem die Abweichung vom Sollwert alphanumerisch dargestellt ist. Überschreitet dabei die Abweichung vom Sollwert einen bestimmten Grenzwert, so wird das entsprechende Feld 10 optisch hervorgehoben. Im dargestellten Beispiel ist der Istwert des rechten hinteren Reifen 2,4, was dem Sollwert entspricht, so daß die Abweichung im zugeordneten Feld 10 entsprechend Null ist. Der Istwert des linken hinteren Reifen ist 2,5, so daß entsprechend die Abweichung in Feld 10 +0,1 beträgt. Entsprechend weicht der Istwert 2,2 der rechten vorderen Reifen um -0,1 vom Sollwert 2,3. Die Abweichung des linken vorderen Reifens hingegen beträgt -0,3 vom Grenzwert, der für die vorderen Reifen bei 2,1 liegt. Dadurch erhält also der Kraftfahrzeugführer unmittelbar die Information, daß er den Reifendruck um mindestens 0,3 erhöhen muß, um wieder in den zulässigen Toleranzbereich zu kommen.

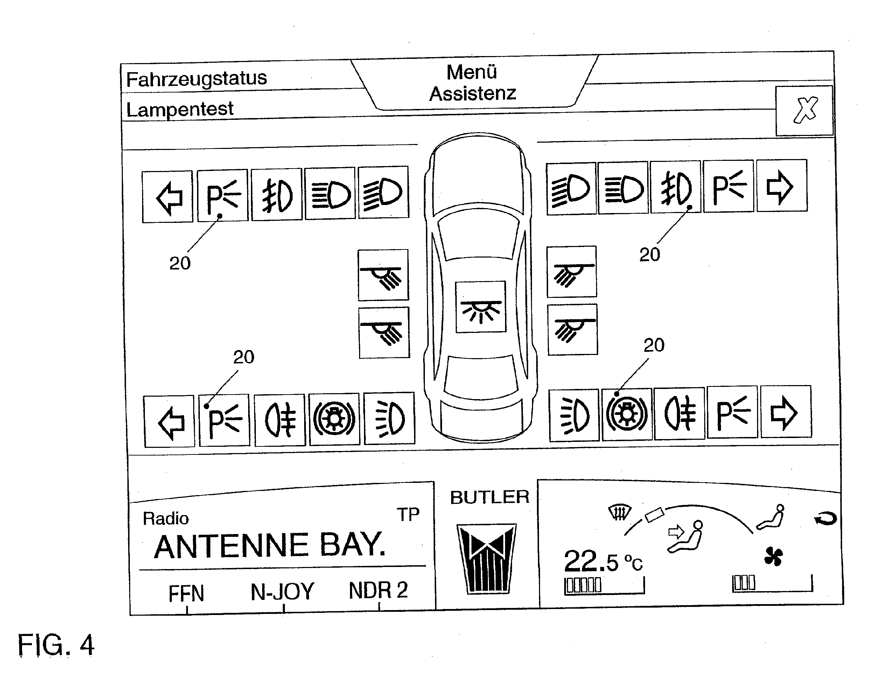

In der Fig. 4 ist das Menü für die Fahrzeugleuchten dargestellt, wobei diese mittels ihrer üblichen Piktogramme 20 an ihrer Position im Kraftfahrzeug dargestellt sind.

Da nicht zu jederzeit alle Beleuchtungseinrichtungen eingeschaltet sind, wird für die Beleuchtungseinrichtungen eine im Steuergerät befindliche Prüfprozedur durchgeführt. Hierzu werden die einzelnen Beleuchtungseinrichtungen beispielsweise kurzzeitig im Startvorgang angesteuert und optisch und / oder elektrisch geprüft. Bei einer elektrischen Überprüfung wird beispielsweise kontrolliert, ob die Beleuchtungseinrichtung Strom zieht. Ist nämlich der Glühfaden gerissen, so ist der Stromkreis offen und es kann kein Strom fließen. Durch geeignete Wahl der Spannung kann dabei auch ein störendes Aufleuchten in der Prüfphase verhindert werden. Ergibt nun die Prüfphase eine oder mehrere defekte Beleuchtungseinrichtungen, so werden die zugehörigen Piktogramme 20 optisch hervorgehoben.

## Patentansprüche

1. Verfahren zur Darstellung der Funktionsbereitschaft von Beleuchtungseinrichtungen eines Kraftfahrzeugs mittels eines Steuergerätes und einer Anzeigeeinheit, wobei das Steuergerät auf Fahrzeugzustandsdaten verschiedener Steuergeräte und Sensoren zugreifen kann und die erfaßten Ist-Werte mit mindestens jeweils einem Soll-Wert verglichen werden,
**dadurch gekennzeichnet, daß**
ein piktogrammförmiges Kraftfahrzeug (3) dargestellt wird und die Beleuchtungseinrichtungen mittels ihrer üblichen Piktogramme (20) lokal am piktogrammförmigen Kraftfahrzeug (3) an den Stellen angeordnet werden, der ihrem lokalen Auftreten im Kraftfahrzeug entspricht,
das Steuergerät eine Prüfprozedur umfaßt, wobei die Beleuchtungseinrichtungen mittels der Prüfprozeduren in ihrer Funktionalität getestet werden, und
die Piktogramm defekter Beleuchtungseinrichtungen optisch hervorgehoben dargestellt werden.

2. Verfahren nach einem der vorangegangenen Ansprüche, **dadurch gekennzeichnet, daß** die erfaßten Fahrzeugzustände automatisch oder manuell abspeicherbar sind.

3. Vorrichtung zur Darstellung der Funktionsbereitschaft von Beleuchtungseinrichtungen eines Kraftfahrzeugs umfassend ein Steuergeräte und eine Anzeigeeinheit, wobei das Steuergerät mit Fahrzeugzustandssensoren und/oder Fahrzeugzustandsdaten beinhaltenden Steuergeräten verbunden ist und Sollwerte und Prüfprozeduren abgelegt sind,
**dadurch gekennzeichnet, daß**
ein piktogrammförmiges Kraftfahrzeug (3) darstellbar ist und die Beleuchtungseinrichtungen mittels ihrer üblichen Piktogramme (20) lokal am piktogrammförmigen Kraftfahrzeug (3) an den Stellen angeordnet werden, der ihrem lokalen Auftreten im Kraftfahrzeug entsprechen,
die Beleuchtungseinrichtungen mittels der Prüfprozeduren in ihrer Funktionalität testbar sind, und
die Piktogramm defekter Beleuchtungseinrichtungen optisch hervorgehoben darstellbar ist.

4. Vorrichtung nach Anspruch 3, **dadurch gekennzeichnet, daß** das Steuergerät über einen Datenbus mit den Fahrzeugzustandssensoren und / oder den Steuergeräten verbunden ist.

5. Vorrichtung nach Anspruch 3 oder 4, **dadurch gekennzeichnet, daß** die Anzeigeeinheit als Touch - Screen ausgebildet ist, deren berührungssensitive Felder eine Eingabeeinheit bilden.
